# FASCICULE DE BREVET EUROPEEN

(11) **EP 1 765 652 B1**
(45) Date de publication et mention de la délivrance du brevet: **15.04.2009**
(21) Numéro de dépôt: 05781867.6
(22) Date de dépôt: 27.06.2005
(51) Int. Cl.: B60T 17/22

(54) **AGENCEMENT D'UN SUPPORT DE ROUE DE VEHICULE AUTOMOBILE**
STÜTZANORDNUNG FÜR EIN KRAFTFAHRZEUGRAD
MOTOR VEHICLE WHEEL SUPPORT ARRANGEMENT

(30) Priorité: 05.07.2004 FR 0407441
(43) Date de publication de la demande: 28.03.2007
(73) Titulaire: RENAULT S.A.S., 92100 Boulogne Billancourt (FR)
(72) Inventeur: ROLLET, Rémi, F-91190 GIF (FR)
(74) Mandataire: Guyon, Rodolphe C.
(86) Numéro de dépôt international: PCT/FR2005/050495
(87) Numéro de publication internationale: WO 2006/013298

(56) Documents cités:
- FR-A- 2 035 182
- GB-A- 2 327 234
- PATENT ABSTRACTS OF JAPAN vol. 2003, no. 06, 3 juin 2003 (2003-06-03) & JP 2003 054438 A (NISSAN MOTOR CO LTD), 26 février 2003 (2003-02-26)

## Description

La présente invention concerne un agencement d'un support de roue de véhicule automobile.

On connaît - par exemple de GB 2327234 A ou de JP 2003 054438 A - un système à rotule pour un bras de suspension d'une suspension multibras de véhicule automobile comprenant une rotule reliée au support de roue par l'intermédiaire d'une queue ou bras de rotule et mobile à l'intérieur d'un boîtier. Ce dernier est fixé sur l'extrémité du bras, orientée vers la roue, suivant un axe s'étendant sensiblement suivant l'axe du bras tandis que les axes de la rotule et du boîtier sont sensiblement perpendiculaires l'un à l'autre.

Dans une conception classique de ce type de boîtier, il est rendu solidaire du bras inférieur par des vis ou des rivets, le boîtier de rotule étant sensiblement situé sous l'extrémité inférieure du porte-fusée orientée vers l'intérieur du véhicule.

Dans le but de répondre à des critères d'allègement des véhicules, des portes fusée en aluminium sont intégrés dans les montages de roue, simultanément à l'utilisation de matériau plus dur tel la fonte pour la liaison rotule. Lors d'un choc, une pression forte est générée au niveau de la liaison rotule et une déformation plastique de type matage peut apparaître entre la queue de rotule et le porte fusée, dont la matière est plus molle que la fonte.

Un des objectifs de l'invention est donc de proposer un agencement de support de roue d'un véhicule automobile qui permette d'éviter ce risque d'endommagement du porte fusée, au moins dans le cas d'un choc léger induisant une faible variation de carrossage réversible.

Le document FR 2 035 182 A, qui est considéré comme représentant l'état de la technique le plus pertinent, décrit (les références entre parenthèses s'appliquent à ce document) un agencement d'un support de roue de véhicule automobile dans lequel un moyeu monté à rotation sur un porte fusée (6), porte la roue et un disque de frein (5) associé à cette roue, et dans lequel le porte fusée (6) comporte un élément sphérique (42) apte à tourner dans un boîtier de rotule (7) solidaire d'un bras de suspension, de sorte que le porte fusée (6) et le bras de suspension sont reliés par une liaison rotule (7/42), dont l'objet de la revendication indépendante 1 diffère en ce que le boîtier de rotule (21) présente au moins une cage (31), apte à recevoir l'élément sphérique (22), et un élément d'appui (33) en saillie de la cage (31) apte à entier en contact avec le disque de frein (6) en cas de choc subi par le véhicule.

En réponse à des objectifs que l'on retrouve invariablement chez les différents constructeurs automobiles, la présente invention se veut également peu coûteuse et peu encombrante.

Pour répondre à ces objectifs, l'invention propose un agencement d'un support de roue de véhicule automobile dans lequel un moyeu, monté à rotation sur un porte fusée, porte la roue et un disque de frein associé à cette roue, et dans lequel le porte fusée comporte un élément sphérique apte à tourner dans un boîtier de rotule solidaire d'un bras de suspension, de sorte que le porte fusée et le bras de suspension sont reliés par une liaison rotule. Cet agencement est caractérisé en ce que le boîtier de rotule présente au moins une cage, apte à recevoir l'élément sphérique, et un élément d'appui en saillie de la cage apte à entrer en contact avec le disque de frein en cas de choc latéral subi par le véhicule au niveau de la roue.

Selon différentes caractéristiques de la présente invention,
- le boîtier de rotule est situé sous le plan horizontal passant par l'axe de la roue.
- le boîtier de rotule et l'élément d'appui en saillie forment une unique pièce.
- le boîtier présente une patte de fixation, distincte de l'élément d'appui, qui permet la fixation du boîtier à un bras de suspension
- un jeu déterminé est laissé avant le choc subi par le véhicule entre l'élément d'appui et la surface intérieure du disque de frein.
- le boîtier de rotule est obtenu par forge.

D'autres caractéristiques et avantages de l'invention apparaîtront à la lecture de la description détaillée qui suit pour la compréhension de laquelle on se reportera aux dessins annexés dans lesquels :
- la figure 1 est une représentation en coupe d'un agencement de support de roue selon l'invention,
- la figure 2 est une représentation schématique agrandie d'un point de la figure 2,
- la figure 3 est une représentation en perspective d'un boîtier de rotule selon l'invention.

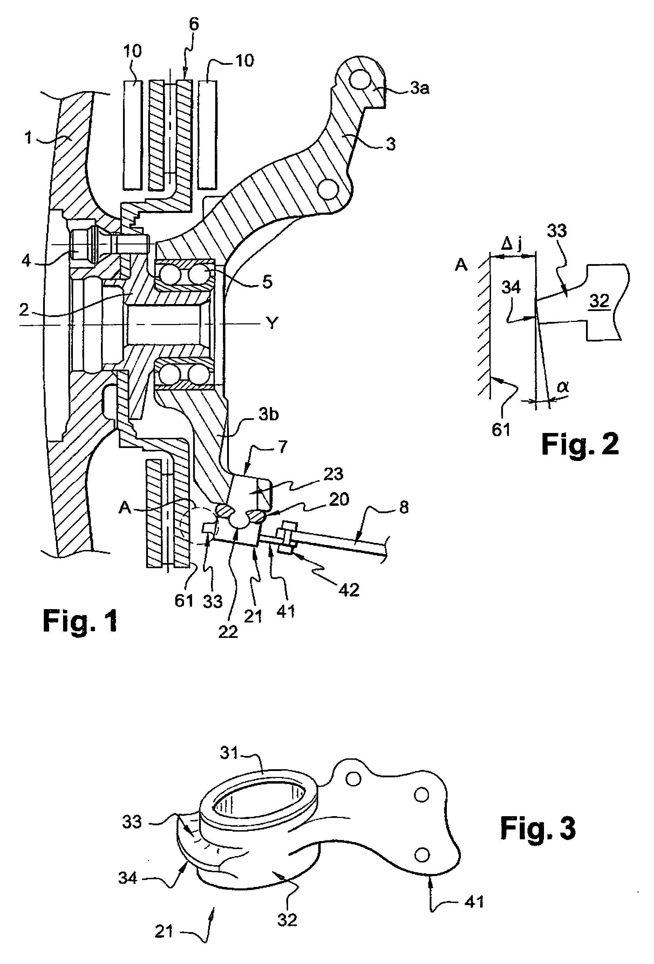

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représentée à la figure 1, un ensemble roue/frein de roue est constitué d'au moins une roue 1 fixée sur un moyeu 2. La roue 1 est classiquement fixée sur le moyeu 2 par quatre ou cinq vis de roue telles que la vis 4 visible sur la figure. Un disque de frein 6 associé à la roue 1 comporte classiquement deux patins 10 pouvant être sélectivement appliqués sur deux faces en regard du disque 6 pour arrêter la rotation du disque 6 et de la roue 1 dont il est solidaire. Ce disque de frein 6 est également solidarisé au moyeu 2, ce dernier étant monté à rotation sur un porte fusée 3 grâce à un palier à billes 5.

Le porte fusée 3 présente la forme d'une pièce de révolution dont la partie supérieure 3a est rendue solidaire d'un élément du châssis du véhicule, et dont la partie inférieure 3b présente à son extrémité une forme sensiblement horizontale dans laquelle un logement 7 est prévu pour la mise en place d'une queue de rotule 23.

Une liaison rotule 20 est réalisée entre la partie inférieure 3a du porte fusée 3 et un bras de suspension 8, de sorte que le support de roue formé par le moyeu 2, la roue 1, le disque 6 et le porte fusée 3 jouisse du nombre adéquat de degrés de libertés. Cette liaison 20 est obtenue par la coopération d'un élément sphérique 22, rotule proprement dite, qui est rapporté sur le porte fusée 3 par l'intermédiaire d'une queue de rotule 23 solidarisée au porte fusée 3, et d'un boîtier de rotule 21 qui comporte une partie formant une cage 31 pour l'élément sphérique 22 et une portion formant une patte de fixation 41 destinée à être relié au bras de suspension 8.

Le boîtier de rotule 21 est rapporté et fixé, par des moyens de maintien 42 au niveau de la patte de fixation 41, sur l'extrémité orientée vers la roue 1 du bras de suspension inférieur 8. Les moyens de maintien 42 peuvent être à titre d'exemple des vis ou des rivets.

La partie formant cage 31 du boîtier de rotule 21 présente un élément de forme sensiblement cylindrique et creuse 32, qui possède une ouverture à son sommet. Un élément d'appui 33 est situé en saillie de l'élément cylindrique 32. Il sera compris qu'il peut pour cela être situé sur le pourtour de l'élément cylindrique 32, ou prolonger le fond du boîtier 21. Cet élément d'appui 33, distinct de la patte de fixation 41, est situé entre le boîtier 21 et le disque 6. L'ensemble des éléments du boîtier de rotule 21, et au moins l'élément d'appui 33, l'élément cylindrique 32 formant cage 31, et la patte de fixation 41 présente avantageusement la forme d'une pièce unique, issu à titre d'exemple de forge.

L'appui réalisé selon l'invention entre le disque 6 et le boîtier de rotule 21, lors de chocs provoquant une légère variation de carrossage réversible, a lieu sur la surface intérieure 61 du disque 6, orientée vers l'intérieur du véhicule et en regard du porte fusée 3 et du boîtier de rotule 21. De plus, cet appui est réalisé dans la partie inférieure 3b du porte fusée 3, sous l'axe de roue Y. En effet, lors d'un petit choc symbolisé par un effort transversal sur le bas de la roue 1, la partie inférieure du disque 6 a tendance à rentrer vers l'intérieur du véhicule, pendant que la partie supérieure s'éloigne vers l'extérieur du véhicule, selon un mouvement de rotation autour du centre de la roue 1 appelé mouvement de carrossage. Il sera compris que l'appui du disque 6 sur l'élément d'appui 33 du boîtier 21 pourrait avoir lieu au dessus de l'axe de la roue Y selon le choc que l'on désire prendre en charge.

Un jeu déterminé Δj est prévu entre l'élément d'appui 33 et le disque 6. A titre d'exemple, ce jeu Δj peut prendre une valeur inférieure à cinq millimètres. Ce jeu permet un débattement de fonctionnement de la roue, sans que le disque ne soit marqué.

La présente invention vise à créer un point d'appui pour le montage de roue par l'intermédiaire du boîtier de rotule 21. Du fait du débattement vertical autorisé du montage de roue et/ou de l'ensemble de direction, il est difficile de prévoir un appui entre la surface intérieure 61 du disque 6 et la surface de contact 34 du boîtier 21 qui soit un appui à plat. Toutefois, dans un mode de réalisation particulier de l'invention visant à tendre vers un appui à plat, la surface de contact 34 de l'élément d'appui 33, c'est-à-dire la surface en regard du disque de frein 6, peut être inclinée par rapport à la verticale. En effet, le disque 6 doit se rapprocher lors du choc de l'élément faisant saillie 33 du boîtier 21 afin de venir prendre appui et diminuer le risque de matage du porte fusée 3 sous la pression de la queue de rotule 23. Dans le cas d'un petit choc symbolisé par un effort transversal sur le bas de la roue 1, la partie inférieure du disque 6 rentre vers l'intérieur du véhicule selon un mouvement de rotation autour du centre de la roue 1. L'ensemble du disque 6 présente ainsi une inclinaison de carrossage, tel que précédemment cité. Afin d'obtenir un appui à plat entre la surface de contact 34 de l'élément d'appui 33 et la surface intérieure 61 du disque 6, la surface de contact 34 présente avant choc une inclinaison d'angle α, similaire à celle du disque 6 sous l'effet d'un carrossage déterminé. Il sera compris que l'inclinaison de la surface de contact 34 de l'élément d'appui 33 peut être obtenu par l'inclinaison de l'ensemble de l'élément d'appui 33 par rapport à l'horizontale, ou uniquement par l'inclinaison de la surface de contact 34 par rapport à la verticale.

Dans les cas précédemment cités, l'invention vise à ce que le disque 6 puisse venir s'appuyer sur le boîtier de rotule 21 pour de faibles déformations du montage de roue en carrossage, pour lesquels il n'y a pas de dommage entre la rotule 20 et le porte fusée 3. Ainsi, après le choc, le diagnostic est beaucoup plus facile : le professionnel se doit de vérifier s'il y ou non marquage du disque, un marquage qui serait représentatif d'un choc suffisamment important pour que le disque ait tapé contre l'élément d'appui. Cette opération de vérification est beaucoup plus évidente que celle de vérifier si il y a matage ou non du porte fusée, et empêche ainsi de changer des pièces dans le doute, ou pire de ne pas en changer alors qu'il y'en aurait besoin. De plus, cette intervention en après vente est beaucoup moins onéreuse du fait du nombre de pièces limité à changer, à savoir deux disques au lieu d'un porte fusée, d'un roulement, d'un moyeu et d'un bras de suspension.

## Revendications

1. Agencement d'un support de roue de véhicule automobile dans lequel un moyeu (2), monté à rotation sur un porte fusée (3), porte la roue (1) et un disque de frein (6) associé à cette roue (1), et dans lequel le porte fusée (3) comporte un élément sphérique (22) apte à tourner dans un boîtier de rotule (21) solidaire d'un bras de suspension (8), de sorte que le porte fusée (3) et le bras de suspension (8) sont reliés par une liaison rotule (20), **caractérisé en ce que** le boîtier de rotule (21) présente au moins une cage (31), apte à recevoir l'élément sphérique (22), et un élément d'appui (33) en saillie de la cage (31) apte à entrer en contact avec le disque de frein (6) en cas de choc subi par le véhicule.

2. Agencement selon la revendication 1, **caractérisé en ce que** le boîtier de rotule (21) est situé sous le plan horizontal passant par l'axe de la roue (Y).

3. Agencement selon la revendication 1 ou 2, **caractérisé en ce que** le boîtier de rotule (21) et l'élément d'appui en saillie (33) forment une unique pièce.

4. Agencement selon l'une des revendications 1 à 3, **caractérisé en ce que** le boîtier (21) présente une patte de fixation (41), distincte de l'élément d'appui (33), qui permet la fixation du boîtier (21) à un bras de suspension (8).

5. Agencement selon l'une des revendications 2 à 4, **caractérisé en ce qu'**un jeu déterminé (Δj) est laissé avant le choc subi par le véhicule entre l'élément d'appui (33) et la surface intérieure (61) du disque de frein (6).

6. Agencement selon l'une des revendications précédentes, **caractérisé en ce que** le boîtier de rotule (21) est obtenu par forge.

## Claims

1. Motor vehicle wheel support arrangement, in which a hub (2), rotatably mounted on a steering knuckle (3), carries the wheel (1) and a brake disk (6) associated with said wheel (1), and in which the steering knuckle (3) comprises a spherical element (22) capable of rotating in a ball joint housing (21) integral with a suspension arm (8), such that the steering knuckle (3) and the suspension arm (8) are connected by a ball joint link (20), **characterized in that** the ball joint housing (21) has at least one cage (31) adapted to receive the spherical element (22), and a contact element (33) projecting from the cage (31) adapted to come into contact with the brake disk (6) when the vehicle suffers an impact.

2. Arrangement according to Claim 1, **characterized in that** the ball joint housing (21) is situated below the horizontal plane passing through the wheel axis (Y).

3. Arrangement according to Claim 1 or 2, **characterized in that** the ball joint housing (21) and the projecting contact element (33) constitute a single component.

4. Arrangement according to one of Claims 1 to 3, **characterized in that** the housing (21) has a fixing tab (41), separate from the contact element (33), which allows the housing (21) to be fixed to a suspension arm (8).

5. Arrangement according to one of Claims 2 to 4, **characterized in that** predetermined play (Δj) is left prior to the impact suffered by the vehicle between the contact element (33) and the inner surface (61) of the brake disk (6).

6. Arrangement according to one of the preceding Claims, **characterized in that** the ball joint housing (21) is obtained by forging.

## Patentansprüche

1. Stützanordnung für ein Kraftfahrzeugrad, bei der eine Nabe (2), die drehbar auf einem Schenkelträger (3) befestigt ist, das Rad (1) und eine mit diesem Rad (1) verbundene Bremsscheibe (6) trägt, und bei der der Schenkelträger (3) ein Kugelelement (22) umfasst, das sich in einem Kugelgelenkgehäuse (21), das mit einem Aufhängungsarm (8) verbunden ist, drehen kann, so dass der Schenkelträger (3) und der Aufhängungsarm (8) durch eine Kugelgelenkverbindung (20) verbunden sind, **dadurch gekennzeichnet, dass** das Kugelgelenkgehäuse (21) mindestens einen Korb (31), der das Kugelelement (22) aufnehmen kann, und ein aus dem Korb (31) herausragendes Stützelement (33) umfasst, das mit der Bremsscheibe (6) im Falle eines auf das Fahrzeug einwirkenden Stoßes in Kontakt treten kann.

2. Anordnung nach Anspruch 1, **dadurch gekennzeichnet, dass** das Kugelgelenkgehäuse (21) unter der durch die Achse des Rades (Y) verlaufenden Horizontalebene angeordnet ist.

3. Anordnung nach Anspruch 1 oder 2, **dadurch gekennzeichnet, dass** das Kugelgelenkgehäuse (21) und das herausragende Stützelement (33) ein einziges Stück bilden.

4. Anordnung nach einem der Ansprüche 1 bis 3, **dadurch gekennzeichnet, dass** das Gehäuse (21) eine von dem Stützelement (33) getrennte Befestigungsklaue (41) aufweist, die die Befestigung des Gehäuses (21) an einem Aufhängungsarm (8) ermöglicht.

5. Anordnung nach einem der Ansprüche 2 bis 4, **dadurch gekennzeichnet, dass** ein bestimmtes Spiel (Δj) vor dem vom Fahrzeug erlittenen Stoß zwischen dem Stützelement (33) und der Innenseite (61) der Bremsscheibe (6) gelassen wird.

6. Anordnung nach einem der vorhergehenden Ansprüche, **dadurch gekennzeichnet, dass** das Kugelgelenkgehäuse (21) geschmiedet ist.
